# EUROPÄISCHE PATENTSCHRIFT

(11) **EP 2 944 451 B1**
(45) Veröffentlichungstag und Bekanntmachung des Hinweises auf die Patenterteilung: **12.07.2017**
(21) Anmeldenummer: 14167943.1
(22) Anmeldetag: 12.05.2014
(51) Int. Cl.: B29C 51/38, B29C 51/26, B29C 51/10

(54) **Thermoformmaschine**
Thermoforming machine
Machine de formage thermique

(43) Veröffentlichungstag der Anmeldung: 18.11.2015
(60) Teilanmeldung: 17164771.2
(73) Patentinhaber: Geiss AG, 96145 Sesslach (DE)
(72) Erfinder: Daum, Wolfgang, 96106 Ebern (DE)
(74) Vertreter: Isarpatent

(56) Entgegenhaltungen:
- US-A- 3 704 974
- US-A1- 2009 104 300
- US-A1- 2010 270 696

## Beschreibung

### GEBIET DER ERFINDUNG

Die vorliegende Erfindung bezieht sich auf eine Thermoformmaschine mit einer verfahrbaren Tischvorrichtung für ein Formwerkzeug.

### TECHNISCHER HINTERGRUND

Thermoformmaschinen dienen dazu, aus einem flächigen Ausgangsmaterial, welches beispielsweise in Gestalt von Kunststofffolien oder Kunststoffplatten bereitgestellt wird, mit Hilfe der Einwirkung von Wärme Formteile herzustellen. Dies kann zum Beispiel in der Weise erfolgen, dass das Ausgangsmaterial, zum Beispiel ein thermoplastischer Kunststoff, zunächst mittels einer geeigneten Heizeinrichtung beheizt und dadurch erwärmt und anschließend unter Zuhilfenahme eines geeigneten Formwerkzeugs in die gewünschte Form gebracht wird.

Bei derartigen Thermoformmaschinen soll von möglichst vielen Seiten der Maschine ein Zugang zu einem Bearbeitungsbereich innerhalb der Thermoformmaschine, in dem ein Festspannen und Formen des Ausgangsmaterials erfolgt, möglich sein. Ein möglichst ungehinderter Zugang zu diesem Bearbeitungsbereich kann beispielsweise für ein manuelles Einlegen von Ausgangsmaterial oder ein manuelles Entnehmen von fertigen Werkstücken erstrebenswert sein. Zudem wird auch für Heizvorrichtungen sowie für verschiedene Peripheriegeräte wie etwa Beschickungsvorrichtungen für das Ausgangsmaterial und/oder Beschickungsvorrichtungen für Zusatzteile ein möglichst uneingeschränkter Zugang angestrebt.

Darüber hinaus sollen Antriebseinrichtungen der Thermoformmaschine, insbesondere solche für bewegliche Komponenten der Thermoformmaschine, an geeigneter Stelle untergebracht werden, so dass diese ihren Zweck erfüllen können, jedoch den Zugang zu dem Bearbeitungsbereich nicht behindern.

Bisher sind Thermoformmaschinen in der Folge weniger kompakt und weniger platzsparend aufgebaut, als dies wünschenswert erscheint. WO2014020874, EP2586592, US2012211928, JP2002067137, JPH03184828, JPS6064825, EP0063462, EP1524094 zeigen Beispiele von Closed-Chamber-Thermoformmaschinen. US2010270696, US2009104300, US3704974 zeigen Thermoformmaschinen mit kompakt ausgelegten Tischantriebseinrichtungen.

### ZUSAMMENFASSUNG DER ERFINDUNG

Vor diesem Hintergrund ist es Aufgabe der vorliegenden Erfindung, eine Thermoformmaschine zu schaffen, die einen kompakteren, raumsparenderen und vorzugsweise auch kostengünstigeren Aufbau aufweist als bisherige Thermoformmaschinen. Insbesondere sollen hierbei die Zugangsmöglichkeiten für einen Bediener und/oder für Peripheriegeräte nicht eingeschränkt, sondern erhalten oder bevorzugt noch weiter verbessert werden.

Die Lösung dieser Aufgabe gelingt erfindungsgemäß mit einer Thermoformmaschinen mit den Merkmalen des Patentanspruchs 1.

Erfindungsgemäß wird eine Thermoformmaschine vorgeschlagen, welche
- eine verfahrbare Tischvorrichtung für ein Formwerkzeug und
- mindestens eine Antriebseinrichtung
aufweist. Hierbei ist erfindungsgemäß vorgesehen, dass die mindestens eine Antriebseinrichtung im Wesentlichen zwischen einer Einspannebene, in der ein Ausgangsmaterial für ein zu erzeugendes Werkstück einspannbar ist, und einer in einer oberen Verfahrstellung der verfahrbaren Tischvorrichtung durch die Unterkante der verfahrbaren Tischvorrichtung definierten Ebene angeordnet ist.

Die der vorliegenden Erfindung zu Grunde liegende Idee besteht darin, eine oder mehrere Antriebseinrichtungen, mit denen die Thermoformmaschine ausgestattet ist, vorteilhaft und platzsparend in einem Bauraum unterzubringen, der durch zwei Ebenen eingegrenzt wird, einerseits durch die Einspannebene der Thermoformmaschine, und andererseits durch die durch die Unterkante der verfahrbaren Tischvorrichtung definierte Ebene.

Die Tischvorrichtung für das Formwerkzeug, welche insbesondere einen Tisch zum Tragen des Formwerkzeugs sowie mit dem Tisch gemeinsam verfahrbare Abschnitte zum Aufbringen von Halte- und Verfahrkräften auf den Tisch umfassen kann, erfordert in der Regel eine Struktur, die hinreichend stabil ausgebildet ist, um die einwirkenden Lasten aufnehmen zu können, insbesondere um das Formwerkzeug tragen und nach Bedarf auch zum Verformen des erwärmten Ausgangsmaterials beitragen zu können. Um die Lasten aus dem Gewicht des Formwerkzeugs und dem Umformvorgang aufnehmen zu können, wird die Tischvorrichtung somit eine gewisse Ausdehnung insbesondere in einer Verfahrrichtung der Tischvorrichtung aufweisen, die die Tischvorrichtung für eine ausreichende mechanische Tragfähigkeit und Steifigkeit benötigt.

Vorteilhaft wird bei der Erfindung die mindestens eine Antriebseinrichtung zwischen der Einspannebene für das Ausgangsmaterial zum Einen und der in ihrer Position durch die Unterkante der Tischvorrichtung in deren oberer Verfahrstellung definierte, gedachte Ebene zum Anderen auf platzsparende Weise untergebracht. Insbesondere bildet die Unterkante hierbei eine von der Einspannebene entfernte Begrenzung der Tischvorrichtung. In Fällen, in denen die Tischvorrichtung zur Erreichung der benötigten Steifigkeit und Festigkeit beispielsweise mit einem Profil gebildet ist, kann somit die Profilhöhe der Tischvorrichtung vorteilhaft zur Unterbringung der Antriebseinrichtungen genutzt werden. Die Bauhöhe der Thermoformmaschine wird auf diese Weise durch die Antriebseinrichtung(en) nicht in unerwünschter Weise vergrößert, da für die Unterbringung der Antriebseinrichtung(en) Raum genutzt wird, der in Verfahrrichtung der Tischvorrichtung aufgrund der Abmessungen der Tischvorrichtung in deren Verfahrrichtung ohnehin vorhanden ist. Gerade bei Thermoformmaschinen für große Ziehtiefen ist dies nützlich. Zudem wird der Zugang zu der Einspannebene durch die Antriebseinrichtung oder die Antriebseinrichtungen nicht behindert. Die verbesserte Kompaktheit der erfindungsgemäßen Thermoformmaschine kann auch zu einer Verminderung der Herstellkosten für diese beitragen.

Vorteilhafte Ausgestaltungen und Weiterbildungen der Erfindung ergeben sich aus den Unteransprüchen sowie aus der Beschreibung unter Bezugnahme auf die Figuren der Zeichnung.

Erfindungsgemäßist die Antriebseinrichtung als eine Tischantriebseinrichtung zum Antreiben der Tischvorrichtung für das Verfahren derselben ausgebildet, oder es sind mehrere der Antriebseinrichtungen vorgesehen, welche eine Tischantriebseinrichtung oder mehrere Tischantriebseinrichtungen zum Antreiben der Tischvorrichtung für das Verfahren derselben umfassen. Hierdurch wird vorteilhaft ein platzsparender Antrieb der Tischvorrichtung und eine kompakte Bauweise der Gesamtmaschine möglich, insbesondere eine vergleichsweise geringe Bauhöhe bei vergleichsweise großem Verfahrweg der Tischvorrichtung. Zudem ermöglicht es die erfindungsgemäße Anordnung der Tischantriebseinrichtung oder der Tischantriebseinrichtungen zwischen der Einspannebene und der durch die Unterkante definierten Ebene, die Tischantriebseinrichtung(en) in nur geringem Abstand von einem verfahrbaren Tisch der Tischvorrichtung anzuordnen, wodurch lange Abschnitte der Tischvorrichtung zum Aufbringen der Verfahrkräfte auf den Tisch vermieden werden. Dies wiederum kann sich günstig auf die Baugröße der Tischvorrichtung und den Materialbedarf für diese auswirken, da geringere Abstände jener Kraftangriffspunkte, in denen die Tischvorrichtung mit Hilfe der jeweiligen Tischantriebseinrichtung mit einer Kraft zum Verfahren beaufschlagt wird, von den auf den Tisch der Tischvorrichtung einwirkenden Lasten möglich werden.

In einer Ausgestaltung sind mindestens zwei, bevorzugt vier, zwischen der Einspannebene und der gedachten, in der oberen Verfahrstellung der Tischvorrichtung durch die Unterkante der verfahrbaren Tischvorrichtung definierten Ebene angeordnete Tischantriebseinrichtungen vorgesehen. Auf diese Weise kann eine Kraft zum Verfahren der Tischvorrichtung gleichmäßiger aufgebracht werden.

In einer weiteren Ausgestaltung weist die Thermoformmaschine einen verfahrbaren Spannrahmen zum Festspannen des Ausgangsmaterials in der Einspannebene auf, wobei zwei oder mehr der Antriebseinrichtungen vorgesehen sind. Bei dieser Ausgestaltung umfassen die Antriebseinrichtungen eine Tischantriebseinrichtung oder mehrere Tischantriebseinrichtungen zum Antreiben der Tischvorrichtung für das Verfahren derselben, und umfassen ferner eine Spannrahmenantriebseinrichtung oder mehrere Spannrahmenantriebseinrichtungen zum Antreiben des Spannrahmens für das Verfahren desselben. Auf diese Weise wird die platzsparende Unterbringung des Tischantriebs mit der platzsparenden Unterbringung des Spannrahmenantriebs vorteilhaft kombiniert.

Bei einer Weiterbildung sind mindestens zwei, bevorzugt vier, zwischen der Einspannebene und der gedachten, in der oberen Verfahrstellung der Tischvorrichtung durch die Unterkante der verfahrbaren Tischvorrichtung definierten Ebene angeordnete Spannrahmenantriebseinrichtungen vorgesehen. Hierdurch kann vorteilhaft eine Kraft zum Verfahren des Spannrahmens und zum Festspannen des Ausgangsmaterials in der Einspannebene gleichmäßig auf den Spannrahmen aufgebracht werden.

In einer Ausgestaltung können mindestens zwei, bevorzugt vier, Tischantriebseinrichtungen und darüber hinaus mindestens zwei, bevorzugt vier, Spannrahmenantriebseinrichtungen vorgesehen sein.

Insbesondere kann sich die gedachte Ebene, die durch die Unterkante der verfahrbaren Tischvorrichtung in der oberen Verfahrstellung der Tischvorrichtung definiert ist, im Wesentlichen parallel zu der Einspannebene erstrecken.

In einer bevorzugten Ausgestaltung befindet sich die mindestens eine Antriebseinrichtung im Wesentlichen vollständig zwischen der Einspannebene und der in der oberen Verfahrstellung der verfahrbaren Tischvorrichtung durch die Unterkante der verfahrbaren Tischvorrichtung definierten Ebene. Auf diese Weise kann die Maschine noch kompakter gestaltet werden.

In einer Ausgestaltung ist die obere Verfahrstellung der verfahrbaren Tischvorrichtung eine Verfahrstellung der für den Betrieb der Thermoformmaschine vorgesehenen Verfahrstellungen der Tischvorrichtung, in der ein Abstand der gedachten Ebene, die durch die Unterkante der verfahrbaren Tischvorrichtung definiert ist, von der Einspannebene entlang der Verfahrrichtung der Tischvorrichtung am geringsten ist. Insbesondere kann es sich hierbei um die oberstmögliche Verfahrstellung der Tischvorrichtung handeln. Dies kann vorteilhaft zu einer besonders kompakten Bauweise der Thermoformmaschine beitragen.

In einer Ausgestaltung erstreckt sich die Ebene, die in der oberen Verfahrstellung der verfahrbaren Tischvorrichtung durch die Unterkante der verfahrbaren Tischvorrichtung definiert ist, im Wesentlichen horizontal bezüglich eines Bodens, auf dem die Thermoformmaschine zum Zwecke des Betriebs derselben aufstellbar ist.

In einer Ausgestaltung ist mit der mindestens einen Antriebseinrichtung ein Spindeltrieb, insbesondere ein Kugelgewindetrieb, derart gekoppelt, dass eine Spindel des Spindeltriebs mittels der mindestens einen Antriebseinrichtung antreibbar ist. Dies ermöglicht eine wirkungsvolle Umsetzung einer von der Antriebseinrichtung bereitgestellten Bewegung in eine Linearbewegung, die beispielsweise vorteilhaft zum Verfahren der Tischvorrichtung oder des Spannrahmens genutzt werden kann.

In einer Ausgestaltung weist die mindestens eine Antriebseinrichtung einen Motor auf. Der Motor kann in einer bevorzugten Ausgestaltung insbesondere als ein Elektromotor, beispielsweise ein Drehstrommotor, ausgebildet sein. Mittels eines motorischen, insbesondere elektromotorischen, Antriebs können zu bewegende Komponenten mit hoher Genauigkeit verfahren oder bewegt werden. Dies kann zum Beispiel für das Verfahren der Tischvorrichtung für das Formwerkzeug, aber auch für das Verfahren des Spannrahmens nützlich und vorteilhaft sein, da von der Tischvorrichtung oder dem Spannrahmen anzufahrende Positionen längs ihrer jeweiligen Verfahrrichtung bei dieser Ausgestaltung mit verbesserter Genauigkeit eingenommen werden können. Zudem kann durch den Einsatz eines Motors, insbesondere eines Elektromotors, anstelle eines pneumatischen oder hydraulischen Antriebs ein Pneumatik- oder Hydraulikschrank mit Ventilen und weiterer pneumatischer bzw. hydraulischer Ausrüstung entfallen, was wiederum eine noch kompaktere Bauweise der Thermoformmaschine ermöglicht.

In alternativen Ausgestaltungen könnte die mindestens eine Antriebseinrichtung jedoch stattdessen als eine pneumatische oder als eine hydraulische Antriebseinrichtung ausgebildet sein.

In einer bevorzugten Weiterbildung ist eine Rotationsachse des Motors im Wesentlichen parallel zu der Einspannebene ausgerichtet. Bei einer weiteren Weiterbildung verläuft die Rotationsachse im Wesentlichen parallel zu einer Längsrichtung der Thermoformmaschine. Durch die beiden vorgenannten Weiterbildungen kann eine noch platzsparendere Anordnung der mindestens einen Antriebseinrichtung erreicht werden.

Bei einer weiteren Ausgestaltung weist die mindestens eine Antriebseinrichtung ein Getriebe, insbesondere ein Winkelgetriebe, auf. Ein Getriebe kann eine Wandlung von Drehzahl und Drehmoment zur Anpassung derselben an die Erfordernisse der anzutreibenden Komponente ermöglichen. Mittels eines Winkelgetriebes gelingt zudem vorteilhaft eine Umlenkung einer von der Antriebseinrichtung bereitgestellten Bewegung, zum Beispiel eines von dem Motor abtriebsseitig bereitgestellten Drehmoments. Eine derartige Umlenkung kann insbesondere dann vorteilhaft sein, wenn die Antriebseinrichtung einen Motor aufweist und dessen Rotationsachse im Wesentlichen parallel zu der Einspannebene ausgerichtet ist.

In einer Ausgestaltung der Erfindung sind mehrere der Antriebseinrichtungen vorgesehen, welche zwei zueinander benachbart angeordnete Antriebseinrichtungen umfassen. Hierbei weisen die beiden zueinander benachbart angeordneten Antriebseinrichtungen jeweils ein Getriebe, insbesondere ein Winkelgetriebe, auf und sind derart angeordnet, dass die Getriebe in entgegengesetzte Richtung weisen. Auf diese Weise kann beispielsweise eine erste der beiden Antriebseinrichtungen als Tischantriebseinrichtung ausgebildet und hierfür das Getriebe für einen möglichst direkten Angriff der Verstellkraft an einem Tisch der Tischvorrichtung nahe an diesem angeordnet werden, während die benachbarte zweite Antriebseinrichtung als Spannrahmenantriebseinrichtung ausgeführt und mit ihrem Getriebe von der Tischvorrichtung hinreichend beabstandet angeordnet werden kann, um Be- und Entladevorgänge sowie die Bewegung weiterer beweglicher Bauteile, beispielsweise der Teile eines Fensterplattensystems, nicht zu behindern.

In einer Ausgestaltung kann die Thermoformmaschine vier Tischantriebseinrichtungen und vier Spindeltriebe für das Verfahren der Tischvorrichtung, insbesondere vier Kugelgewindetriebe, aufweisen. Mit jeder der Tischantriebseinrichtungen ist abtriebsseitig eine Spindel, insbesondere eine Kugelrollspindel, eines zugeordneten der Spindeltriebe derart gekoppelt, dass die Spindel mittels der Tischantriebseinrichtung für das Verfahren der Tischvorrichtung antreibbar ist. Insbesondere für das Verfahren einer Tischvorrichtung mit einem im Wesentlichen rechteckigen Tisch kann dies von Vorteil sein, da dann für ein präzises und wenig elastisches Bewegen der Tischvorrichtung im Bereich jeder Ecke derselben ein Spindeltrieb mit einer zugeordneten Tischantriebseinrichtung angeordnet werden kann.

In einer weiteren Ausgestaltung kann die Thermoformmaschine vier Spannrahmenantriebseinrichtungen und vier Spindeltriebe für das Verfahren des Spannrahmens, insbesondere vier Kugelgewindetriebe, aufweisen. Hierbei ist mit jeder der Spannrahmenantriebseinrichtungen abtriebsseitig eine Spindel, insbesondere eine Kugelrollspindel, eines der Spindeltriebe derart gekoppelt, dass die Spindel mittels der zugeordneten Spannrahmenantriebseinrichtung für das Verfahren des Spannrahmens antreibbar ist. Dies kann insbesondere bei einem im Wesentlichen rechteckig ausgeführten Spannrahmen nützlich sein, um durch Anordnen je eines Spindeltriebs und einer diesem zugeordneten Spannrahmenantriebseinrichtung im Bereich jeder Ecke des Spannrahmens ein präzises Verfahren des Spannrahmens zu erzielen.

In einer bevorzugten Weiterbildung sind die Spindeltriebe für das Verfahren des Spannrahmens an Eckpunkten eines gedachten ersten Rechtecks angeordnet.

Gemäß einer weiteren bevorzugten Weiterbildung sind die Spindeltriebe für das Verfahren der Tischvorrichtung an Eckpunkten eines gedachten zweiten Rechtecks angeordnet.

In einer Ausgestaltung sind die Eckpunkte des zweiten Rechtecks innerhalb des ersten Rechtecks angeordnet. Auf diese Weise können die Tischantriebseinrichtungen nahe an einem Tisch der Tischvorrichtung angeordnet werden, was eine leichtere und materialsparende Bauweise der Tischvorrichtung ermöglicht, während zugleich die Spindeltriebe für das Verfahren des Spannrahmens oberhalb der Einspannebene weiter entfernt vom Tisch angeordnet werden können, um die Zugänglichkeit zu erhalten und, bei Einsatz einer verstellbaren Fensterplatte, ausreichend Platz für die Verstellung der Fensterplattenteile bereitzustellen.

In einer Ausgestaltung kann die Thermoformmaschine zwei Tischantriebseinrichtungen und zwei Spindeltriebe für das Verfahren der Tischvorrichtung, insbesondere zwei Kugelgewindetriebe, aufweisen. Mit jeder der beiden Tischantriebseinrichtungen kann abtriebsseitig eine Spindel, insbesondere eine Kugelrollspindel, eines zugeordneten der Spindeltriebe derart gekoppelt sein, dass die Spindel mittels der Tischantriebseinrichtung für das Verfahren der Tischvorrichtung antreibbar ist. Die beiden Tischantriebseinrichtungen sowie die Spindeltriebe können beispielsweise an gegenüberliegenden Seiten oder im Bereich diagonal gegenüberliegender Ecken eines Tisches der Tischvorrichtung angeordnet sein.

In einer weiteren Ausgestaltung kann die Thermoformmaschine zwei Spannrahmenantriebseinrichtungen und zwei Spindeltriebe für das Verfahren des Spannrahmens, insbesondere zwei Kugelgewindetriebe, aufweisen. Hierbei ist mit jeder der Spannrahmenantriebseinrichtungen abtriebsseitig eine Spindel, insbesondere eine Kugelrollspindel, eines der Spindeltriebe derart gekoppelt, dass die Spindel mittels der zugeordneten Spannrahmenantriebseinrichtung für das Verfahren des Spannrahmens antreibbar ist. Die beiden Spannrahmenantriebseinrichtungen sowie die Spindeltriebe können bei dieser Ausgestaltung beispielsweise an gegenüberliegenden Seiten oder im Bereich diagonal gegenüberliegender Ecken des Spannrahmens angeordnet sein.

In einer Ausgestaltung ist die Thermoformmaschine als eine Einstation-Thermoformmaschine ausgebildet. Die erfindungsgemäße Anordnung der mindestens einen Antriebseinrichtung kann insbesondere bei Einstation-Thermoformmaschinen vorteilhaft sein, da bei derartigen Maschinen im Wesentlichen sämtliche Schritte beim Thermoformen des Ausgangsmaterials zur Herstellung des Werkstücks, insbesondere das Erwärmen und Formen, an ein und derselben Arbeitsstation ausgeführt werden. Eine Einstation-Thermoformmaschine profitiert daher besonders von der guten Zugänglichkeit und der kompakten Bauweise, die durch die Erfindung ermöglicht werden. Die Thermoformmaschine ist als eine Closed-Chamber-Thermoformmaschine ausgebildet. Als Closed-Chamber-Thermoformmaschinen werden Thermoformmaschinen bezeichnet, welche ein geschlossenes und abgedichtetes Maschinengehäuse aufweisen. Dies ermöglicht es, ein Durchhängen des erwärmten Ausgangsmaterials durch die Wahl eines geeigneten Innendrucks zu vermeiden.

In einer Ausgestaltung kann vorgesehen sein, dass die Thermoformmaschine ein Maschinengehäuse mit einer Formplatte aufweist, wobei die mindestens eine Antriebseinrichtung im Wesentlichen zwischen einer einem Spannrahmen zugewandten Seite, insbesondere einer Oberseite, der Formplatte und der gedachten, durch die Unterkante der verfahrbaren Tischvorrichtung in deren oberer Verfahrstellung definierten Ebene angeordnet sein kann. Insbesondere kann die mindestens eine Antriebseinrichtung bis an die dem Spannrahmen zugewandte Seite der Formplatte heranreichen, steht bei dieser Ausgestaltung über diese jedoch nicht vor. Diese Ausgestaltung kann beispielsweise dann vorteilhaft sein, wenn eine Fensterplatte vorgesehen ist, welche gegen die Formplatte dichtet, und das Ausgangsmaterial auf bewegliche Teile der Fensterplatte aufgelegt und gegen diese Teile eingespannt wird.

In einer Ausgestaltung kann die mindestens eine Antriebseinrichtung eine Antriebseinrichtung für Teile einer Fensterplatte oder mehrere Antriebseinrichtungen für Teile einer Fensterplatte umfassen, welche zwischen der Einspannebene und der gedachten Ebene, insbesondere zwischen der einem Spannrahmen zugewandten Seite der Formplatte und der gedachten, durch die Unterkante der verfahrbaren Tischvorrichtung in der oberen Verfahrstellung derselben bestimmten Ebene, untergebracht ist oder sind.

Die Thermoformmaschine kann insbesondere als eine Vakuumformmaschine ausgebildet sein, mittels der das Ausgangsmaterial mit Hilfe eines Vakuums und des Formwerkzeugs umgeformt werden kann.

Die obigen Ausgestaltungen und Weiterbildungen lassen sich, sofern dies sinnvoll ist, beliebig miteinander kombinieren. Weitere mögliche Ausgestaltungen, Weiterbildungen und Implementierungen der Erfindung umfassen auch nicht explizit genannte Kombinationen von zuvor oder im Folgenden in Bezug auf die Ausführungsbeispiele beschriebenen Merkmalen der Erfindung. Hierbei wird der Fachmann insbesondere auch Einzelaspekte als Verbesserungen oder Ergänzungen zu der jeweiligen Grundform der Erfindung hinzufügen.

### INHALTSANGABE DER ZEICHNUNG

Nachfolgend wird die Erfindung anhand des in den schematischen Figuren angegebenen Ausführungsbeispiels näher erläutert. Hierbei zeigen
- Fig. 1: eine Draufsicht auf eine Thermoformmaschine gemäß einem Ausführungsbeispiel der Erfindung, mit einem Spannrahmen und einer verfahrbaren Tischvorrichtung, wobei einige Bauteile zur besseren Übersicht weggelassen sind;
- Fig. 2: eine Ansicht der Thermoformmaschine gemäß dem Ausführungsbeispiel der Fig. 1 in einem Querschnitt A-A, wie in Fig. 1 angedeutet;
- Fig. 3: eine Ansicht der Thermoformmaschine gemäß dem Ausführungsbeispiel der Fig.1 in einem Querschnitt B-B, wie in Fig. 1 angedeutet;
- Fig. 4: eine Ansicht der Thermoformmaschine gemäß dem Ausführungsbeispiel der Fig. 1 in einem Längsschnitt C-C, wie in Fig. 1 angedeutet;
- Fig. 5: eine Vorderansicht der Thermoformmaschine gemäß dem Ausführungsbeispiel der Fig. 1 in Blickrichtung D, siehe Fig. 1, wobei der Spannrahmen nach oben und die Tischvorrichtung nach unten verfahren sind, beispielsweise um ein fertiges Werkstück zu entnehmen, zusätzlich ein auf einem Tisch der Tischvorrichtung angeordnetes beispielhaftes Formwerkzeug gezeigt ist und einige Teile eines Maschinengehäuses zur besseren Sichtbarkeit darin angeordneter Bauteile weggelassen wurden;
- Fig. 6: eine Ansicht der Thermoformmaschine gemäß dem Ausführungsbeispiel der Fig. 1, die jener der Fig. 5 entspricht, wobei allerdings der Spannrahmen weggelassen ist und die Tischvorrichtung mit dem Formwerkzeug sich in seiner oberen Endstellung befindet, in der ein Thermoformen eines Ausgangsmaterials stattfinden kann;
- Fig. 7: eine schematische Illustration zur Veranschaulichung der Anordnung einer Formplatte, einer Fensterplatte, eines Spannrahmens und eines flächigen Ausgangsmaterials zueinander; und
- Fig. 8: eine schematisch vereinfachte Darstellung zur Veranschaulichung der Anordung von Spindeltrieben zum Verfahren der Tischvorrichtung und des Spannrahmens.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen.

In den Figuren der Zeichnungen sind gleiche, funktionsgleiche und gleich wirkende Elemente, Merkmale und Komponenten - soweit nichts anderes ausgeführt ist - jeweils mit denselben Bezugszeichen versehen.

Die Elemente der Zeichnungen sind nicht notwendigerweise maßstabsgetreu zueinander dargestellt.

### BESCHREIBUNG VON AUSFÜHRUNGSBEISPIELEN

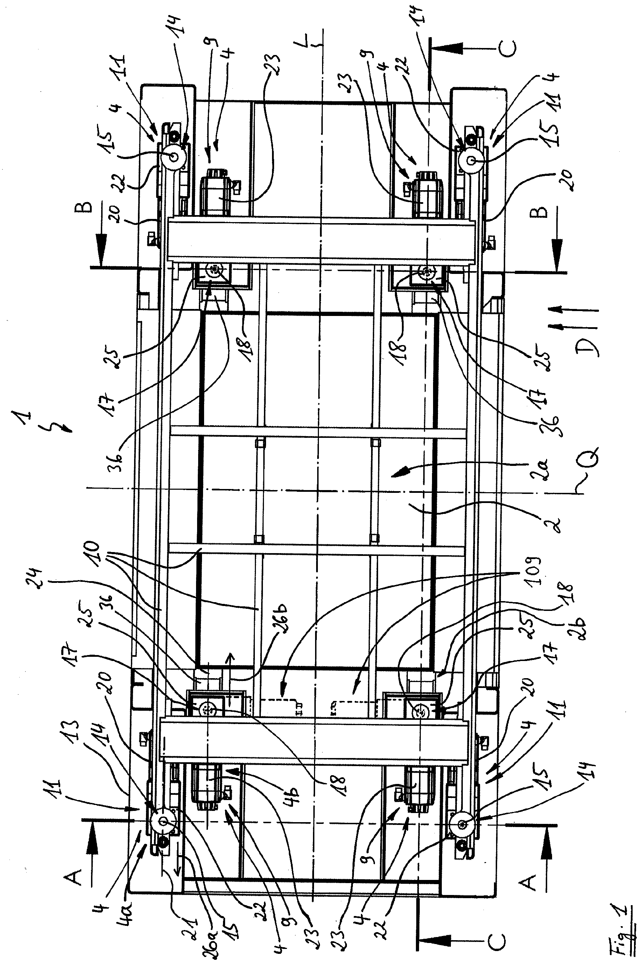

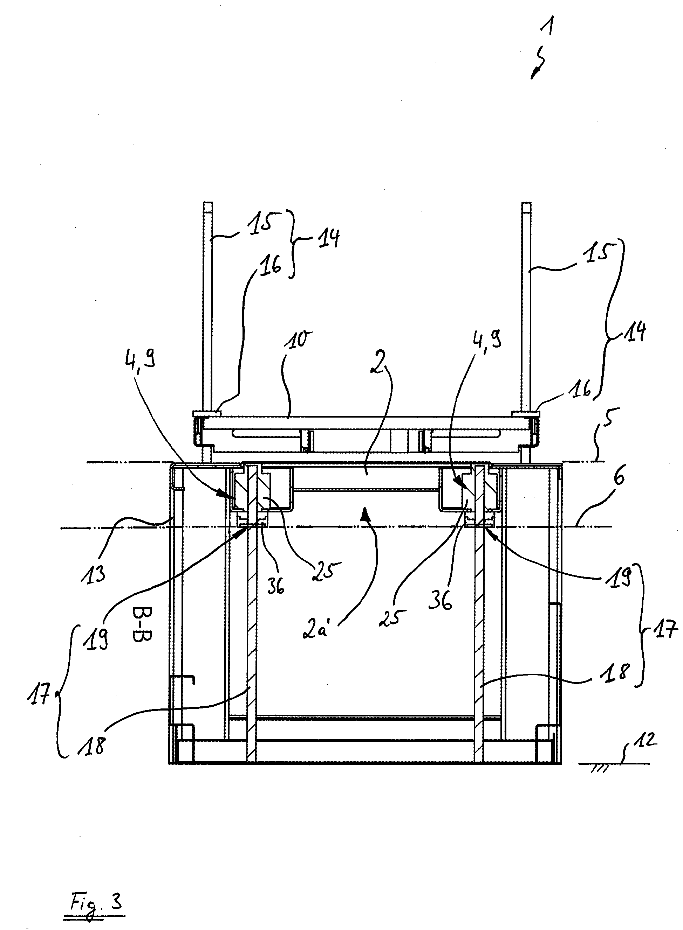

Ein Ausführungsbeispiel der Erfindung wird nachfolgend unter Bezugnahme auf die Figuren 1 bis 8 näher erläutert. Die Figuren 1 bis 8 zeigen eine gemäß dem Closed-Chamber-Prinzip aufgebaute Einstation-Thermoformmaschine 1 gemäß dem Ausführungsbeispiel, wobei einige Bauteile, darunter beispielsweise Teile eines Maschinengehäuses, eine Heizung, sowie Peripherie- und Anbaugeräte, Bedieneinrichtungen, Schaltschränke etc., zur besseren Übersicht weggelassen sind. Zum Zweck des Betriebs der Thermoformmaschine 1 ist diese auf einem im Wesentlichen horizontalen Boden 12 aufgestellt. Eine zu dem Boden 12 im Wesentlichen parallele, horizontale Richtung ist in den Figuren mit dem Bezugszeichen H, eine zu dem Boden 12 im Wesentlichen senkrechte, vertikale Richtung mit dem Bezugszeichen V bezeichnet.

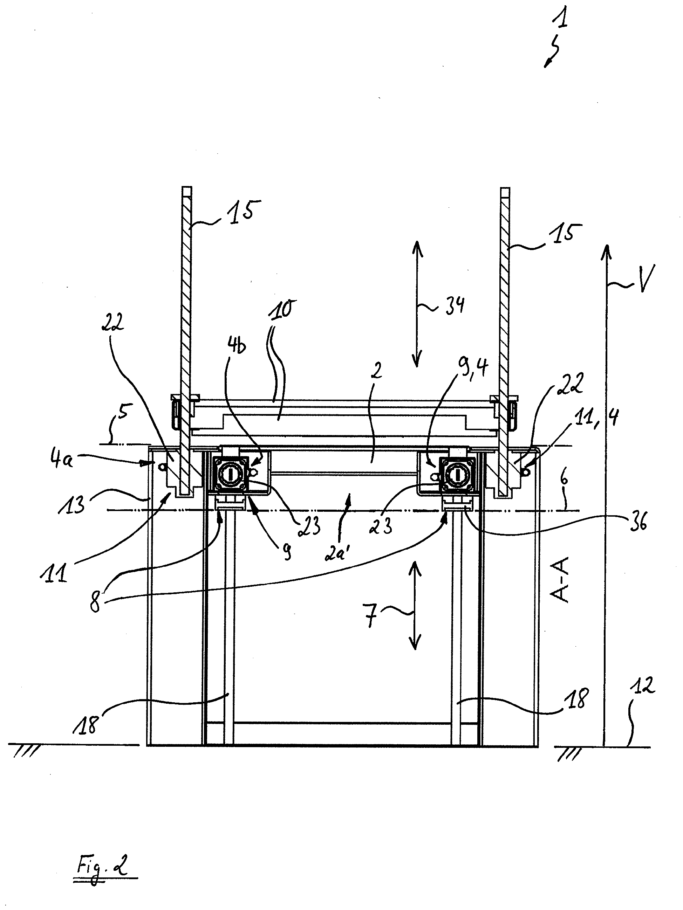

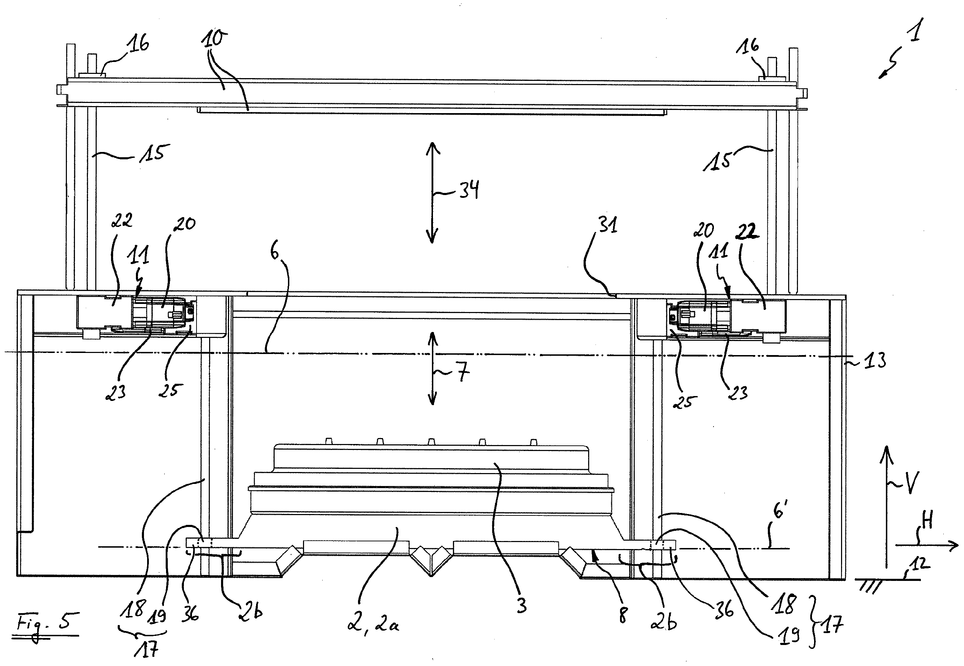

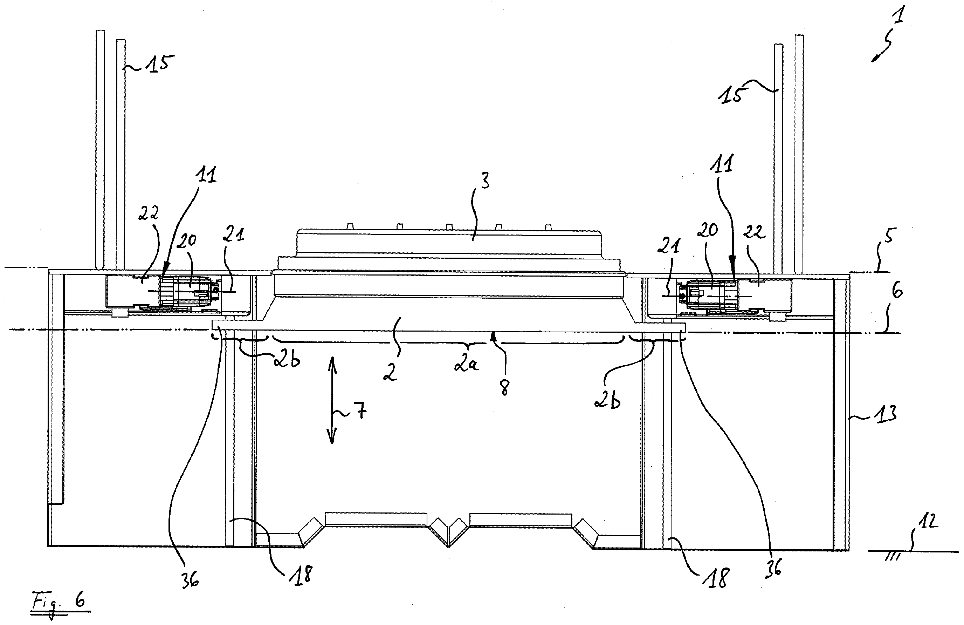

Ein geschlossenes, im Betrieb der Thermoformmaschine 1 abgedichtetes Maschinengehäuse 13 mit einem stabilen Maschinenrahmen bildet einen unteren Teil der Thermoformmaschine 1. Eine Oberseite des Maschinengehäuses 13 wird durch eine so genannte Formplatte 30 gebildet. Die Formplatte 30 weist einen im Wesentlichen rechteckigen Ausschnitt 31 auf, dessen Form und Größe mit Form und Abmessungen eines entlang einer Verfahrrichtung 7 verfahrbaren Tisches 2a korrespondieren. Der Tisch 2a ist Bestandteil einer Tischvorrichtung 2, die zusätzlich zu dem Tisch 2a Abschnitte 2b aufweist, welche für das Halten und Verfahren des Tisches 2a vorgesehen sind und gemeinsam mit dem Tisch 2a verfahrbar sind. Bei dem gezeigten Ausführungsbeispiel stehen die Abschnitte 2b horizontal von dem Tisch 2a ab und weisen für eine ausreichende Steifigkeit und Festigkeit ein geeignetes Profil, siehe beispielsweise Fig. 2, auf. Die Tischvorrichtung 2 ist dafür vorgesehen und eingerichtet, ein Formwerkzeug 3 zum Thermoformen eines nicht dargestellten Werkstücks auf dem Tisch 2a zu tragen, siehe die Figuren 5 und 6, die auch ein beispielhaftes Formwerkzeug 3 zeigen. Ferner ist die Tischvorrichtung 2 dafür ausgebildet, zusammen mit dem Formwerkzeug 3 in Verfahrrichtung 7 bezüglich des Maschinengehäuses 13 zu verfahren, derart, dass das Formwerkzeug 3 durch den Ausschnitt 31 hindurchtreten kann, siehe Figuren 5 und 6.

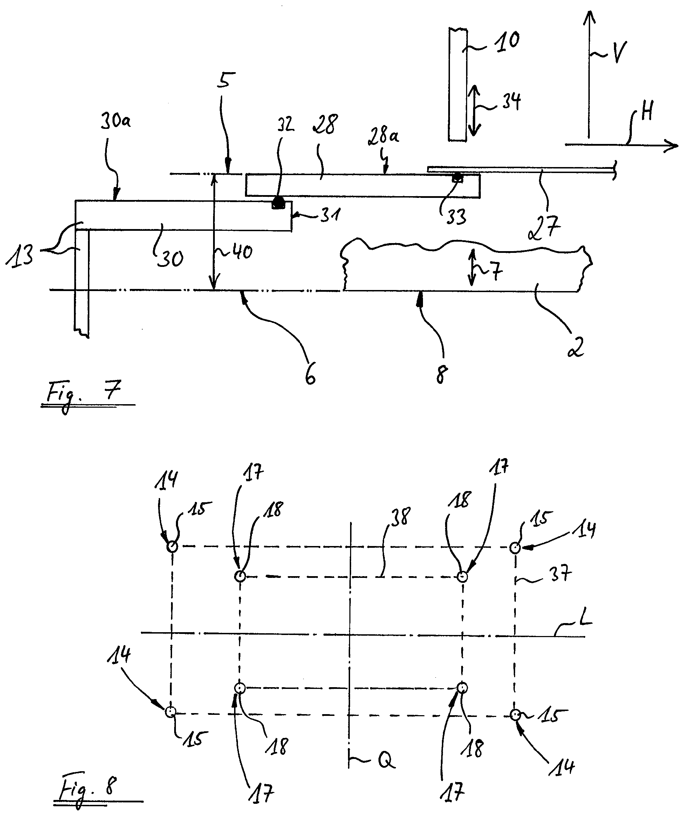

Auf einer Oberseite 30a der Formplatte 30, also einer oberen Oberfläche der Formplatte 30, ist eine mehrteilige Fensterplatte mit mehreren Fensterplattenteilen 28, von denen nur in Figur 7 eines schematisch teilweise gezeigt ist, angeordnet. In den Figuren 1 bis 6 sind die Fensterplattenteile 28 nicht gezeigt. Die Fensterplattenteile 28 sind gegeneinander verschiebbar und gegenüber der Formplatte 30 mittels nur schematisch angedeuteter Dichteinrichtungen 32 abgedichtet. Zweck der Fensterplattenteile 28 ist es, den Ausschnitt 31 zur Anpassung an die Größe eines zu verarbeitenden flächigen Ausgangsmaterials 27, bei dem es sich um eine thermoplastische Kunststofffolie oder Kunststoffplatte handeln kann, teilweise abzudecken.

Das Ausgangsmaterial 27 liegt auf einer Oberseite 28a der Fensterplattenteile 28 auf, wobei wiederum eine Dichteinrichtung 33 die Dichtigkeit gegenüber den Fensterplattenteilen 28 herstellt, siehe Figur 7. Ein oberhalb des Maschinengehäuses 13 angeordneter, entlang einer Verfahrrichtung 34 nach oben und unten bezüglich des Maschinengehäuses 13 verfahrbarer Spannrahmen 10 ist dafür vorgesehen, das flächige Ausgangsmaterial 27 gegen die Oberseite 28a der Fensterplattenteile 28 festzuspannen. Die Oberseite 28a bildet somit eine Einspannebene 5, in der das Ausgangsmaterial 27 für das durch Thermoformen zu erzeugende Werkstück eingespannt wird. Nach Einspannen des Ausgangsmaterials 27 kann dieses mittels einer nicht dargestellten Heizeinrichtung erwärmt werden. Durch das Konstruktionsprinzip der Closed-Chamber-Thermoformmaschine mit einem abgedichteten, geschlossenen Maschinengehäuse 13 ist es möglich, ein Durchhängen der erwärmten und dadurch plastisch formbaren Kunststoffplatte oder Kunststofffolie unter deren Eigengewicht zu vermeiden. Das erwärmte Ausgangsmaterial 27 wird mittels des Formwerkzeugs 3, insbesondere unter Einsatz von Vakuum, in die gewünschte Zielform gebracht.

Die Verfahrrichtung 7 der Tischvorrichtung 2 und die Verfahrrichtung 34 des Spannrahmens 10 verlaufen jeweils im Wesentlichen parallel zur vertikalen Richtung V und im Wesentlichen senkrecht zu der Einspannebene 5 und den Oberseiten 28a und 30a.

Um die Tischvorrichtung 2 und somit den Tisch 2a entlang der Verfahrrichtung 7 verfahren zu können, weist die Thermoformmaschine 1 vier Antriebseinrichtungen 4 auf, die nachfolgend als Tischantriebseinrichtungen 9 bezeichnet werden. Ferner weist die Thermoformmaschine 1 vier weitere Antriebseinrichtungen 4 auf, die nachfolgend als Spannrahmenantriebseinrichtungen 11 bezeichnet werden und dem Verfahren des Spannrahmens 10 dienen. Mittels der Tischantriebseinrichtungen 9 ist somit die Tischvorrichtung 2 mit dem Tisch 2a für deren Bewegung entlang der Verfahrrichtung 7 antreibbar, während mittels der Spannrahmenantriebseinrichtungen 11 der Spannrahmen 10 für dessen Bewegung entlang der Verfahrrichtung 34 antreibbar ist.

Jede der Tischantriebseinrichtungen 9 weist einen Elektromotor 23, beispielsweise einen Drehstrommotor, mit einer parallel zu der Einspannebene 5 und somit auch parallel zur horizontalen Richtung H ausgerichteten Rotationsachse 24, sowie ein mit dem Elektromotor 23 gekoppeltes Winkelgetriebe 25 auf. Um die Tischvorrichtung 2 für die Verfahrbewegung entlang der Verfahrrichtung 7 antreiben zu können, ist jedes der Winkelgetriebe 25 abtriebsseitig mit einer im Maschinengehäuse 13 gelagerten, im Wesentlichen entlang der vertikalen Richtung V ausgerichteten Kugelrollspindel 18 gekoppelt. Somit ist jeder der Elektromotoren 23 in der Lage, eine zugeordnete der Kugelrollspindeln 18 in Drehung zu versetzen, wobei die von dem Elektromotor 23 bereitgestellte Rotationsbewegung durch das Winkelgetriebe 25 um 90 Grad umgelenkt wird. Mit jeder der Kugelrollspindeln 18 wirkt eine zugeordnete an der Tischvorrichtung 2, bei dem gezeigten Ausführungsbeispiel an den Abschnitten 2b, festgelegte Mutter 19, insbesondere eine Kugelumlaufmutter, zusammen, die in den Figuren nur schematisch dargestellt ist. Mittels einer synchronen Rotation der vier Kugelrollspindeln 18 kann der Tisch 2a auf- und abbewegt werden. Jeweils eine Mutter 19 und eine dieser zugeordnete Kugelrollspindel 18 bilden somit einen mit der zugeordneten Tischantriebseinrichtung 9 gekoppelten Kugelgewindetrieb 17 zum Verfahren der Tischvorrichtung 2. Das Winkelgetriebe 25 kann derart ausgelegt sein, dass mittels des Winkelgetriebes 25 eine Wandlung von Drehmoment und Drehzahl, die von dem Elektromotor 23 bereitgestellt werden, erfolgt.

Jede der Spannrahmenantriebseinrichtungen 11 weist einen Elektromotor 20, zum Beispiel einen Drehstrommotor, mit einer parallel zu der Einspannebene 5 und somit auch parallel zur horizontalen Richtung H ausgerichteten Rotationsachse 21, sowie ein mit dem Elektromotor 20 gekoppeltes Winkelgetriebe 22 auf. Für den Antrieb des Spannrahmens 10 zum Verfahren desselben entlang der Verfahrrichtung 34 ist jedes der Winkelgetriebe 22 abtriebsseitig mit einer im Wesentlichen parallel zur vertikalen Richtung V nach oben durch die Einspannebene 5 von dem Maschinengehäuse 13 abragenden Kugelrollspindel 15 gekoppelt. Hierdurch ist jeder der Elektromotoren 20 in der Lage, eine zugeordnete der vier Kugelrollspindeln 15 in Drehung zu versetzen. Die von dem Elektromotor 20 bereitgestellte Rotationsbewegung wird durch das Winkelgetriebe 22 um 90 Grad umgelenkt. Mit jeder der Kugelrollspindeln 15 wirkt eine zugeordnete Mutter 16, insbesondere eine Kugelumlaufmutter, zusammen, wodurch mittels einer synchronen Rotation der vier Kugelrollspindeln 15 der Spannrahmen 10 auf- und abbewegt werden kann. Somit bilden jeweils eine an dem Spannrahmen 10 festgelegte Mutter 16 und eine dieser zugeordnete Kugelrollspindel 15 einen mit der zugeordneten Spannrahmenantriebseinrichtung 11 gekoppelten Kugelgewindetrieb 14 zum Verfahren des Spannrahmens 10. Auch mittels des Winkelgetriebes 22 kann eine Wandlung von Drehzahl und Drehmoment, die von dem Elektromotor 20 zur Verfügung gestellt werden, erfolgen.

Die Tischantriebseinrichtungen 9 und die Spannrahmenantriebseinrichtungen 11 sind jeweils fest mit dem Maschinengehäuse 13 gekoppelt. Dies kann beispielhaft durch ein Verschrauben des jeweiligen Winkelgetriebes 22, 25 mit dem Maschinengehäuse 13 und/oder der Formplatte 30 und darüber hinaus ein Verschrauben eines Gehäuses des jeweiligen Elektromotors 20, 23 mit dem zugeordneten Winkelgetriebe 22 bzw. 25 erfolgen.

Eine gedachte Ebene 6, siehe die Figuren 2 bis 7, verläuft im Wesentlichen parallel zu der Einspannebene 5 unterhalb der Einspannebene 5 und ist entlang der Verfahrrichtung 7 der Tischvorrichtung 2 von der Einspannebene 5 beabstandet. Die Position der somit im Wesentlichen bezüglich des Bodens 12 horizontalen, gedachten Ebene 6 entlang der Verfahrrichtung 7, d.h. die Lage der Ebene in vertikaler Richtung V, wird festgelegt durch eine von der Einspannebene 5 entfernte Unterkante 8 der verfahrbaren Tischvorrichtung 2 in der obersten Verfahrstellung der Tischvorrichtung 2 entlang der Verfahrrichtung 7, die die Tischvorrichtung 2 beim Betrieb der Thermoformmaschine 1 einzunehmen bestimmt ist. Die Unterkante 8 bildet somit eine von der Einspannebene 5 entfernte Begrenzung der Tischvorrichtung 2. Hierbei ist die Unterkante 8, die die Position der Ebene 6 definiert, die in der obersten Verfahrstellung der Tischvorrichtung 2 von der Einspannebene 5 entlang der Verfahrrichtung 7 am weitesten entfernte Begrenzung der Tischvorrichtung 2. Dies bedeutet, dass die Unterkante 8 im Bereich des Tisches 2a oder der Abschnitte 2b oder, falls der Tisch 2 und die Abschnitte 2b auf gleicher Höhe enden, im Bereich beider liegen kann. Wie aus Fig. 2 ersichtlich, ist bei dem Ausführungsbeispiel die gedachte Ebene 6 durch die Unterkante - mit anderen Worten, einen unteren Rand - von Trägern 36, die auch die Abschnitte 2b ausbilden, definiert. Mittels der Träger 36 können bei dem gezeigten Ausführungsbeispiel mit Hilfe der Spindeln 18 Verfahr- und Haltekräfte in den Tisch 2a eingeleitet werden. Die Unterkante der Träger 36 entspricht bei dem gezeigten Ausführungsbeispiel der Unterkante 8 der Tischvorrichtung 2. Aus Fig. 2 wird auch deutlich, dass der Tisch 2a in einem Mittenbereich 2a' weniger hoch ausgebildet sein kann. In Varianten des Ausführungsbeispiels könnte der Tisch 2a im Mittenbereich 2a' jedoch eine Unterkante beispielsweise auf gleicher Höhe wie die Unterkante der Träger 36 aufweisen.

Bei dieser oberen Verfahrstellung der Tischvorrichtung 2, wie sie in den Figuren 2 bis 4 und 6 gezeigt ist, kann es sich insbesondere um eine Formungsstellung handeln, in der das Thermoformen mit Hilfe des Formwerkzeugs 3 durchgeführt wird. In dieser Verfahrstellung der Tischvorrichtung 2 ist, gemessen entlang der Verfahrrichtung 7, der Abstand zwischen der Unterkante 8 und der Einspannebene 5, und somit auch der Abstand 40 zwischen der Einspannebene 5 und der gedachten Ebene 6, am geringsten. Zudem ist in dieser Verfahrstellung auch ein Abstand der Unterkante 8, gemessen entlang der Verfahrrichtung 7, von der als Oberseite 30a bezeichneten oberen Oberfläche der Formplatte 30 am geringsten.

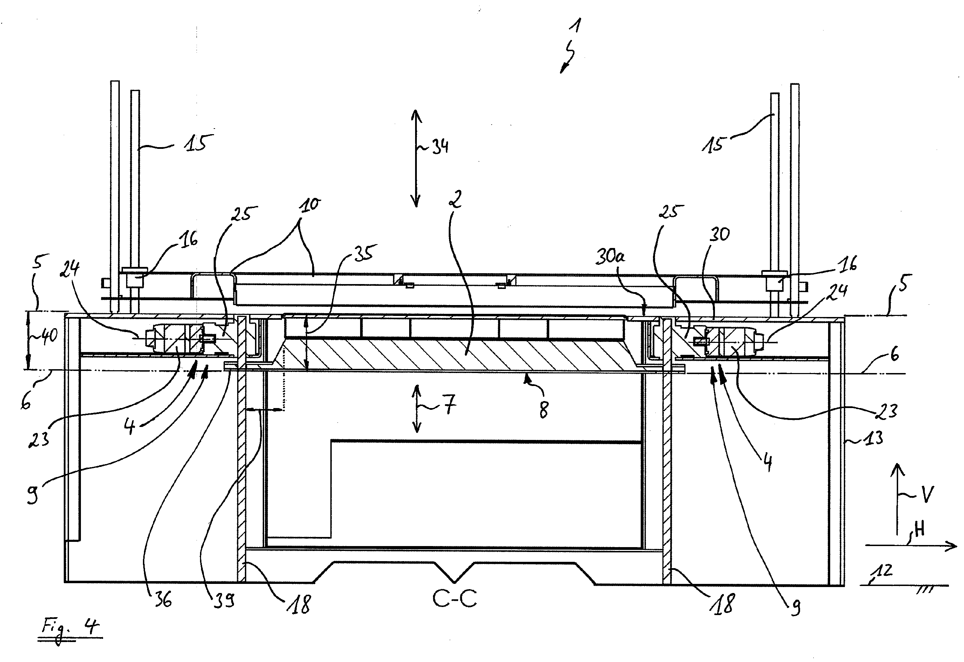

Ausgehend von der in Fig. 4 gezeigten Verfahrstellung der Tischvorrichtung 2 ist vorgesehen, dass die Tischvorrichtung 2 beim Betrieb der Thermoformmaschine 1 entlang der Verfahrrichtung 7 wieder nach unten verfahren werden kann, wodurch sich die Unterkante 8 weiter von der Einspannebene 5 entfernt. Von der durch die oberste vorgesehene Verfahrposition der Tischvorrichtung 2 festgelegten, gedachten Ebene 6 soll angenommen werden, dass diese hierbei ihre Position beibehält. Jedoch sind auch in den anderen Verfahrstellungen, die die Tischvorrichtung 2 beim Betrieb der Thermoformmaschine 1 einnehmen kann, die Antriebseinrichtungen 4 bei dem gezeigten Ausführungsbeispiel stets zwischen der Einspannebene 5 und einer zu dieser im Wesentlichen parallelen, weiteren gedachten Ebene 6', deren Position längs der Verfahrrichtung 7 durch die Unterkante 8 der Tischvorrichtung 2 in deren jeweiliger aktueller Verfahrstellung festgelegt ist, angeordnet. Die Ebene 6' ist in der Figur 5 für die untere Endstellung der Tischvorrichtung 2 beispielhaft gezeigt.

Die Antriebseinrichtungen 4, mit anderen Worten, die vier Tischantriebseinrichtungen 9 mit den Elektromotoren 23 und den Winkelgetrieben 25, und die vier Spannrahmenantriebseinrichtungen 11 mit den Elektromotoren 20 und den Winkelgetrieben 22, befinden sich somit jeweils zwischen der Einspannebene 5 und der gedachten Ebene 6. In dieser Weise wird vorteilhaft für die Unterbringung der Antriebseinrichtungen 4 jener Platz genutzt, der sich aufgrund der erforderlichen Höhe 35 der Tischkonstruktion, insbesondere der zur Aufnahme der wirkenden Lasten notwendigen Trägerhöhe, für die Ermittlung der Bauhöhe des Maschinengehäuses 13 dem geforderten Verfahrweg der Tischvorrichtung 2 ohnehin hinzuaddiert.

Wie aus den Figuren ersichtlich ist, sind die Elektromotoren 23 und die Winkelgetriebe 25 der Tischantriebseinrichtungen 9 sowie die Elektromotoren 20 und die Winkelgetriebe 22 der Spannrahmenantriebseinrichtungen 11 im Wesentlichen vollständig zwischen der Einspannebene 5 und der gedachten Ebene 6 untergebracht. Die Anordnung der Tisch- und Spannrahmenantriebseinrichtungen 9, 11 zwischen den Ebenen 5 und 6 vermeidet somit eine unerwünschte Vergrößerung der Höhe des Maschinengehäuses 13 aufgrund der Unterbringung der Antriebseinrichtungen.

Wie aus den Figuren 1, 4 und 6 ersichtlich ist, sind die im Wesentlichen parallel zu der Einspannebene 5 ausgerichteten Rotationsachsen 21, 24 der Elektromotoren 20, 23 auch jeweils im Wesentlichen parallel zu einer Längsrichtung L der Thermoformmaschine 1, siehe Figur 1, ausgerichtet. Auf diese Weise können je zwei benachbarte Antriebseinrichtungen, bei dem gezeigten Ausführungsbeispiel je eine Tischantriebseinrichtung 9 und eine Spannrahmenantriebseinrichtung 11, die exemplarisch mit den Bezugszeichen 4b und 4a bezeichnet sind, mit dem jeweiligen Elektromotor und Getriebe platzsparend untergebracht werden. Die Winkelgetriebe 22, 25 der beiden zueinander benachbart angeordneten Antriebseinrichtungen 4a, 4b weisen hierbei in entgegengesetzte Richtungen 26a, 26b entlang der Längsrichtung L.

Bei dem in den Figuren dargestellten Ausführungsbeispiel sind die Tischantriebseinrichtungen 9 und die Spannrahmenantriebseinrichtungen 11 in bevorzugter Ausrichtung zwischen der Einspannebene 5 und der gedachten Ebene 6 angeordnet. In Varianten des Ausführungsbeispiels könnten die Tischantriebseinrichtungen 9 und die Spannrahmenantriebseinrichtungen 11 aber stattdessen auch anders ausgerichtet werden, sofern sichergestellt ist, dass sie zwischen der Einspannebene 5 und der gedachten Ebene 6 untergebracht sind und keine Kollision mit anderen beweglichen oder nichtbeweglichen, hier nicht weiter dargestellten Bauteilen der Thermoformmaschine 1 stattfindet. Die Figur 1 zeigt, wie in einer Variante des Ausführungsbeispiels, die in Figur 1 gestrichelt skizziert ist, die Tischantriebseinrichtung 9 alternativ um +90 Grad bzw. -90 Grad um die Längsachse der Spindel 18 gedreht eingebaut werden kann. Zwei Tischantriebseinrichtungen gemäß dieser Variante sind in Figur 1 gezeigt und mit dem Bezugszeichen 109 bezeichnet. In weiteren Varianten könnten beispielsweise die Spannrahmenantriebseinrichtungen 11 jeweils um 180 Grad um die vertikale Richtung V gedreht werden, sofern keine Kollision mit anderen Bauteilen stattfindet. Die Anordnung der Fig. 1 wird jedoch bevorzugt, da die gezeigte Anordnung der Spindeln dem Platzbedarf des Fensterplattensystems entgegenkommt.

Die Thermoformmaschine 1 gemäß dem in den Figuren dargestellten Ausführungsbeispiel weist vier parallel ausgerichtete Kugelrollspindeln 15, vier parallel ausgerichtete Kugelrollspindeln 18, vier Muttern 16 und vier Muttern 19 auf. Somit ist die Tischvorrichtung 2 durch das Zusammenwirken der vier Tischantriebseinrichtungen 9 mit den vier mit den Kugelrollspindeln 18 und den Muttern 19 gebildeten Spindeltrieben 17 antreibbar. Zudem kann der Spannrahmen 10 durch das Zusammenwirken der vier Spannrahmenantriebseinrichtungen 11 mit den vier mit den Kugelrollspindeln 15 und den Muttern 16 gebildeten Spindeltrieben 14 angetrieben werden.

Bei dem bevorzugten Ausführungsbeispiel sind die mit den Kugelrollspindeln 15 und den Muttern 16 gebildeten Spindeltriebe 14 für das Verfahren des Spannrahmens 10 an Eckpunkten eines gedachten ersten Rechtecks 37 angeordnet. Zudem sind die mit den Kugelrollspindeln 18 und den Muttern 19 gebildeten Spindeltriebe 17 für das Verfahren der Tischvorrichtung 2 an Eckpunkten eines gedachten zweiten Rechtecks 38 angeordnet. Siehe hierzu Figur 8, in der die Anordnung der Spindeltriebe 14, 17, wie sie sich in einer Draufsicht auf die Thermoformmaschine 1 gemäß dem Ausführungsbeispiel darstellt, schematisch vereinfacht gezeigt ist. Die Eckpunkte des zweiten Rechtecks 38 sind innerhalb des ersten Rechtecks 37 angeordnet, wobei die Anordnung derart gewählt ist, dass die Anordnung der Eckpunkte jedes der Rechtecke 37, 38 bezüglich der Längsrichtung L und der Querrichtung Q der Thermoformmaschine 1 symmetrisch ist. Vorzugsweise ist zudem, wie aus den Figuren 1 bis 6 hervorgeht, auch die Anordnung der Tischantriebseinrichtungen 9 und der Spannrahmenantriebseinrichtungen 11 im Wesentlichen symmetrisch bezüglich der Längsrichtung L und der Querrichtung Q.

Die für das Ausführungsbeispiel vorgeschlagene Anordnung hat den Vorteil, dass die Tischantriebseinrichtungen 9 und die mit diesen jeweils gekoppelten Spindeln 18 nahe an dem Tisch 2a angeordnet werden können, d.h. mit geringem horizontalen Abstand 39 zu dem Tisch 2a. Durch Vermeidung großer durch die Träger 36 zu überbrückender Abstände können die Abschnitte 2b kurz gehalten und die Träger 36 und somit auch die Tischvorrichtung 2 vergleichsweise kompakt, leicht und materialsparend gebaut werden.

Wie bereits erwähnt, weist die Thermoformmaschine 1 gemäß dem Ausführungsbeispiel verstellbare Fensterplattenteile 28 auf. Um deren Bewegbarkeit in der Horizontalen parallel zu der dem Spannrahmen 10 zugewandten Oberseite 30a der Formplatte 30 nicht zu beeinträchtigen, können die Antriebseinrichtungen 4 insbesondere derart angeordnet sein, dass sie nicht über die Oberseite 30a der Formplatte 30 hinausstehen, mit anderen Worten, dass die Antriebseinrichtungen 4, die die Tischantriebseinrichtungen 9 und die Spannrahmenantriebseinrichtungen 11 umfassen, im Wesentlichen zwischen einer Ebene, die im Wesentlichen parallel zu der Einspannebene 5 verläuft und deren Position durch die Oberseite 30a der Formplatte 30 definiert ist, und der gedachten Ebene 6 untergebracht sind.

In dem Bauraum zwischen der Einspannebene 5 und der gedachten Ebene 6 oder zwischen der durch die Oberseite 30a der Formplatte 30 gebildeten Ebene und der gedachten Ebene 6 können zudem in den Figuren nicht dargestellte Antriebseinrichtungen für die Fensterplattenteile 28 untergebracht sein.

Obwohl die Erfindung vorstehend anhand bevorzugter Ausführungsbeispiel vollständig beschrieben wurde, ist sie nicht darauf beschränkt, sondern kann auf vielfältige Art und Weise modifiziert werden.

Insbesondere kann die Anzahl der vorgesehenen Antriebseinrichtungen an die Erfordernisse der Thermoformmaschine, beispielsweise an Größe und Gewicht des Tisches, des Formwerkzeugs und/oder des Spannrahmens, angepasst werden.

Zudem könnten statt der Kugelgewindetriebe beispielsweise Trapezgewindetriebe zum Einsatz kommen.

### Liste der Bezugszeichen

- 1: Thermoformmaschine
- 2: Tischvorrichtung
- 2a: Tisch (Tischvorrichtung)
- 2a': Mittenbereich (Tisch)
- 2b: Abschnitt (Tischvorrichtung)
- 3: Formwerkzeug
- 4: Antriebseinrichtung
- 4a: Antriebseinrichtung
- 4b: Antriebseinrichtung
- 5: Einspannebene
- 6: gedachte Ebene
- 6': weitere gedachte Ebene
- 7: Verfahrrichtung (Tischvorrichtung)
- 8: Unterkante (Tischvorrichtung)
- 9: Tischantriebseinrichtung
- 10: Spannrahmen
- 11: Spannrahmenantriebseinrichtung
- 12: Boden
- 13: Maschinengehäuse
- 14: Kugelgewindetrieb
- 15: Spindel (Kugelgewindetrieb)
- 16: Mutter (Kugelgewindetrieb)
- 17: Kugelgewindetrieb
- 18: Spindel (Kugelgewindetrieb)
- 19: Mutter (Kugelgewindetrieb)
- 20: Elektromotor
- 21: Rotationsachse
- 22: Winkelgetriebe
- 23: Elektromotor
- 24: Rotationsachse
- 25: Winkelgetriebe
- 26a: Richtung
- 26b: Richtung
- 27: Ausgangsmaterial
- 28: Fensterplattenteil
- 28a: Oberseite (Fensterplattenteil)
- 30: Formplatte
- 30a: Oberseite (Formplatte)
- 31: Ausschnitt
- 32: Dichteinrichtung
- 33: Dichteinrichtung
- 34: Verfahrrichtung (Spannrahmen)
- 35: Höhe (Tisch)
- 36: Träger (Tisch)
- 37: erstes gedachtes Rechteck
- 38: zweites gedachtes Rechteck
- 39: Abstand
- 40: Abstand
- 109: Tischantriebseinrichtung (Variante)

- V: vertikale Richtung
- H: horizontale Richtung

- L: Längsrichtung (Thermoformmaschine)
- Q: Querrichtung (Thermoformmaschine)

## Patentansprüche

1. Closed-Chamber-Thermoformmaschine (1), mit:
einer verfahrbaren Tischvorrichtung (2) für ein Formwerkzeug (3); und
mindestens einer Antriebseinrichtung (4);
wobei die Antriebseinrichtung (4) als eine Tischantriebseinrichtung (9) zum Antreiben der Tischvorrichtung (2) für das Verfahren derselben ausgebildet ist oder mehrere der Antriebseinrichtungen (4) vorgesehen sind, welche eine Tischantriebseinrichtung (9) oder mehrere Tischantriebseinrichtungen (9) zum Antreiben der Tischvorrichtung (2) für das Verfahren derselben umfassen,
**dadurch gekennzeichnet, dass** die mindestens eine Antriebseinrichtung (4) im Wesentlichen zwischen einer Einspannebene (5), in der ein Ausgangsmaterial (27) für ein zu erzeugendes Werkstück einspannbar ist, und einer in einer oberen Verfahrstellung der verfahrbaren Tischvorrichtung (2) durch die Unterkante (8) der verfahrbaren Tischvorrichtung (2) definierten Ebene (6) angeordnet ist.

2. Thermoformmaschine nach Anspruch 1,
**dadurch gekennzeichnet, dass** die Thermoformmaschine (1) ferner einen verfahrbaren Spannrahmen (10) zum Festspannen des Ausgangsmaterials in der Einspannebene (5) aufweist und dass zwei oder mehr der Antriebseinrichtungen (4) vorgesehen sind, wobei die Antriebseinrichtungen (4) eine Tischantriebseinrichtung (9) oder mehrere Tischantriebseinrichtungen (9) zum Antreiben der Tischvorrichtung (2) für das Verfahren derselben umfassen, und wobei die Antriebseinrichtungen (4) ferner eine Spannrahmenantriebseinrichtung (11) oder mehrere Spannrahmenantriebseinrichtungen (11) zum Antreiben des Spannrahmens (10) für das Verfahren desselben umfassen.

3. Thermoformmaschine nach einem der vorstehenden Ansprüche,
**dadurch gekennzeichnet, dass** sich die in der oberen Verfahrstellung der verfahrbaren Tischvorrichtung (2) durch die Unterkante (8) der verfahrbaren Tischvorrichtung (2) definierte Ebene (6) im Wesentlichen parallel zu der Einspannebene (5) erstreckt.

4. Thermoformmaschine nach einem der vorstehenden Ansprüche,
**dadurch gekennzeichnet, dass** die mindestens eine Antriebseinrichtung (4) sich im Wesentlichen vollständig zwischen der Einspannebene (5) und der in der oberen Verfahrstellung der verfahrbaren Tischvorrichtung (2) durch die Unterkante (8) der verfahrbaren Tischvorrichtung (2) definierten Ebene (6) befindet.

5. Thermoformmaschine nach einem der vorstehenden Ansprüche,
**dadurch gekennzeichnet, dass** die obere Verfahrstellung der verfahrbaren Tischvorrichtung (2) eine der für den Betrieb der Thermoformmaschine (1) vorgesehenen Verfahrstellungen der Tischvorrichtung (2) ist, in der ein Abstand (40) der Ebene (6), die durch die Unterkante (8) der verfahrbaren Tischvorrichtung (2) definiert ist, von der Einspannebene (5) entlang einer Verfahrrichtung (7) der Tischvorrichtung (2) am geringsten ist.

6. Thermoformmaschine nach einem der vorstehenden Ansprüche,
**dadurch gekennzeichnet, dass** sich die in der oberen Verfahrstellung der verfahrbaren Tischvorrichtung (2) durch die Unterkante (8) der verfahrbaren Tischvorrichtung (2) definierte Ebene (6) im Wesentlichen horizontal bezüglich eines Bodens (12), auf dem die Thermoformmaschine (1) zum Zweck des Betriebs derselben aufstellbar ist, erstreckt.

7. Thermoformmaschine nach einem der vorstehenden Ansprüche,
**dadurch gekennzeichnet, dass** mit der mindestens einen Antriebseinrichtung (4) ein Spindeltrieb (14, 17), insbesondere ein Kugelgewindetrieb (14, 17), derart gekoppelt ist, dass eine Spindel (15, 18) des Spindeltriebs (14, 17) mittels der mindestens einen Antriebseinrichtung (4) antreibbar ist.

8. Thermoformmaschine nach einem der vorstehenden Ansprüche,
**dadurch gekennzeichnet, dass** die mindestens eine Antriebseinrichtung (4) einen Motor (20, 23), insbesondere einen Elektromotor (20, 23), aufweist.

9. Thermoformmaschine nach Anspruch 8,
**dadurch gekennzeichnet, dass** eine Rotationsachse (21, 24) des Motors (20, 23) im Wesentlichen parallel zu der Einspannebene (5) ausgerichtet ist.

10. Thermoformmaschine nach einem der vorstehenden Ansprüche,
**dadurch gekennzeichnet, dass** die mindestens eine Antriebseinrichtung (4) ein Getriebe (22, 25), insbesondere ein Winkelgetriebe (22, 25), aufweist.

11. Thermoformmaschine nach einem der vorstehenden Ansprüche,
**dadurch gekennzeichnet, dass** mehrere der Antriebseinrichtungen (4) vorgesehen sind, welche zwei zueinander benachbart angeordnete Antriebseinrichtungen (4a, 4b) umfassen, wobei die beiden zueinander benachbart angeordneten Antriebseinrichtungen (4a, 4b) jeweils ein Getriebe (22, 25), insbesondere ein Winkelgetriebe (22, 25), aufweisen und die beiden Antriebseinrichtungen (4a, 4b) derart angeordnet sind, dass die Getriebe (22, 25) in entgegengesetzte Richtung (26a, 26b) weisen.

12. Thermoformmaschine nach einem der vorstehenden Ansprüche,
**dadurch gekennzeichnet, dass** die Thermoformmaschine (1) als eine Einstation-Thermoformmaschine ausgebildet ist.

## Claims

1. Closed chamber thermoforming machine (1), having:
a manoeuvrable table device (2) for a forming tool (3), and
at least one drive device (4),
wherein the drive device (4) is embodied as a table driving device (9) for driving the table device (2) so as to manoeuvre said table device, or multiple drive devices (4) are provided that comprise a table drive device (9) or multiple table drive devices (9) for driving the table device (2) so as to manoeuvre said table device, **characterized in that** the at least one drive device (4) is essentially arranged between a clamping plane (5), in which a starting material (27) for a workpiece that is to be produced can be clamped, and a plane (6) that is defined in an upper manoeuvring position of the manoeuvrable table device (2) by means of the lower edge (8) of the manoeuvrable table device (2).

2. Thermoforming machine according to Claim 1,
**characterized in that** the thermoforming machine (1) moreover comprises a manoeuvrable clamping frame (10) for fixedly clamping the starting material in the clamping plane (5) and that two or more of the drive devices (4) are provided, wherein the drive devices (4) comprise a table drive device (9) or multiple table drive devices (9) for driving the table device (2) so as to manoeuvre said table device, and wherein the drive devices (4) moreover comprise a clamping frame drive device (11) or multiple clamping frame drive devices (11) for driving the clamping frame (10) so as to manoeuvre said clamping frame.

3. Thermoforming machine according to any one of the preceding claims,
**characterized in that** the plane (6) that is defined in the upper manoeuvring position of the manoeuvrable table device (2) by means of the lower edge (8) of the manoeuvrable table device (2) essentially extends parallel to the clamping plane (5).

4. Thermoforming machine according to any one of the preceding claims, **characterized in that** the at least one drive device (4) is located essentially entirely between the clamping plane (5) and the plane (6) that is defined in the upper manoeuvring position of the manoeuvrable table device (2) by means of the lower edge (8) of the manoeuvrable table device (2).

5. Thermoforming machine according to any one of the preceding claims, **characterized in that** the upper manoeuvring position of the manoeuvrable table device (2) is one of the manoeuvring positions of the table device (2)that are provided for the operation of the thermoforming machine (1) and in which a spacing (40) of the plane (6) that is defined by means of the lower edge (8) of the manoeuvrable table device (2) is at is smallest from the clamping plane (5) along a manoeuvring direction (7) of the table device (2).

6. Thermoforming machine according to any one of the preceding claims, **characterized in that** the plane (6) that is defined in the upper manoeuvring position of the manoeuvrable table device (2) by means of the lower edge (8) of the manoeuvrable table device (2) extends essentially horizontally in relation to the base (12) on which the thermoforming machine (1) can be positioned for the purpose of operating said thermoforming machine.

7. Thermoforming machine according to any one of the preceding claims, **characterized in that** a spindle drive (14, 17), in particular a ball screw drive (14, 17), is coupled to the at least one drive device (4) in such a manner that a spindle (15, 18) of the spindle drive (14, 17) can be driven by means of the at least one drive device (4).

8. Thermoforming machine according to any one of the preceding claims, **characterized in that** the at least one drive device (4) comprises a motor (20, 23), in particular an electric motor (20, 23).

9. Thermoforming machine according to Claim 8,
**characterized in that** an axis of rotation (21, 24) of the motor (20, 23) is aligned essentially parallel to the clamping plane (5).

10. Thermoforming machine according to any one of the preceding claims, **characterized in that** the at least one drive device (4) comprises a gear (22, 25), in particular an angular gear (22, 25).

11. Thermoforming machine according to any one of the preceding claims, **characterized in that** drive devices (4) are provided that comprise two drive devices (4a, 4b) that are arranged adjacent to one another, wherein the two drive devices (4a, 4b) that are arranged adjacent to one another comprise in each case a gear (22, 25), in particular an angular gear (22, 25), and the two drive devices (4a, 4b) are arranged in such a manner that the gears (22, 25) point in opposing directions (26a, 26b).

12. Thermoforming machine according to any one of the preceding claims, **characterized in that** the thermoforming machine (1) is embodied as a single-station thermoforming machine.

## Revendications

1. Machine de thermoformage (1) à chambre fermée, comportant :
un dispositif de table (2) déplaçable pour un outil de moulage (3) ; et au moins un moyen d'entraînement (4) ;
dans laquelle machine de thermoformage le moyen d'entraînement (4) est réalisé en tant qu'un moyen d'entraînement de table (9) destiné à entraîner le dispositif de table (2) pour le déplacement de celui-ci ou dans laquelle plusieurs des moyens d'entraînement (4) sont ménagés, lesquels comprennent un moyen d'entraînement de table (9) ou plusieurs moyens d'entraînement de table (9) destinés à entraîner le dispositif de table (2) pour le déplacement de celui-ci, **caractérisée en ce que** l'au moins un moyen d'entraînement (4) est disposé essentiellement entre un plan de serrage (5), dans lequel une matière de départ (27) peut être serrée pour une pièce à produire, et un plan (6) défini par le bord inférieur (8) du dispositif de table (2) déplaçable dans une position de déplacement supérieure du dispositif vde table (2) déplaçable.

2. Machine de thermoformage selon la revendication 1, **caractérisée en ce que** la machine de thermoformage (1) présente en outre un cadre de serrage (10) déplaçable destiné à serrer la matière de départ dans le plan de serrage (5) et **en ce que** deux des moyens d'entraînement (4) ou plus sont ménagés, dans laquelle les moyens d'entraînement (4) comprennent un moyen d'entraînement de table (9) ou plusieurs moyens d'entraînement de table (9) destinés à entraîner le dispositif de table (2) pour le déplacement de celui-ci, et dans laquelle les moyens d'entraînement (4) comprennent en outre un moyen d'entraînement de cadre de serrage (11) ou plusieurs moyens d'entraînement de cadre de serrage (11) destinés à entraîner le cadre de serrage (10) pour le déplacement de celui-ci.

3. Machine de thermoformage selon l'une quelconque des revendications précédentes,
**caractérisée en ce que** le plan (6) défini par le bord inférieur (8) du dispositif de table (2) déplaçable dans la position de déplacement supérieure du dispositif de table (2) déplaçable s'étend essentiellement parallèlement au plan de serrage (5).

4. Machine de thermoformage selon l'une quelconque des revendications précédentes,
**caractérisée en ce que** l'au moins un moyen d'entraînement (4) est situé essentiellement complètement entre le plan de serrage (5) et le plan défini par le bord inférieur (8) du dispositif de table (2) déplaçable dans la position de déplacement supérieure du dispositif de table (2) déplaçable.

5. Machine de thermoformage selon l'une quelconque des revendications précédentes,
**caractérisée en ce que** la position de déplacement supérieure du dispositif de table (2) déplaçable est l'une des positions de déplacement du dispositif de table (2), ménagées pour le fonctionnement de la machine de thermoformage (1), dans laquelle un écart (40) du plan (6), qui est défini par le bord inférieur (8) du dispositif de table (2) déplaçable, par rapport au plan de serrage (5) est le plus petit le long d'une direction de déplacement (7) du dispositif de table (2).

6. Machine de thermoformage selon l'une quelconque des revendications précédentes,
**caractérisée en ce que** le plan (6) défini par le bord inférieur (8) du dispositif de table (2) déplaçable dans la position de déplacement supérieure du dispositif de table (2) déplaçable s'étend essentiellement horizontalement par rapport à un fond (12) sur lequel la machine de thermoformage (1) peut être placée dans le but du fonctionnement de celle-ci.

7. Machine de thermoformage selon l'une quelconque des revendications précédentes,
**caractérisée en ce qu'**un entraînement à broche (14, 17), notamment une vis d'entraînement à billes (14, 17), est couplé à l'au moins un moyen d'entraînement (4) de manière à ce qu'une broche (15, 18) de l'entraînement à broche (14, 17) puisse être entraînée au moyen de l'au moins un moyen d'entraînement (4).

8. Machine de thermoformage selon l'une quelconque des revendications précédentes,
**caractérisée en ce que** l'au moins un moyen d'entraînement (4) présente un moteur (20, 23), notamment un moteur électrique (20, 23).

9. Machine de thermoformage selon la revendication 8,
**caractérisée en ce qu'**un axe de rotation (21, 24) du moteur (20, 23) est essentiellement orienté parallèlement au plan de serrage (5).

10. Machine de thermoformage selon l'une quelconque des revendications précédentes,
**caractérisée en ce que** l'au moins un moyen d'entraînement (4) présente un engrenage (22, 25), notamment un engrenage angulaire (22, 25).

11. Machine de thermoformage selon l'une quelconque des revendications précédentes,
**caractérisée en ce que** plusieurs des moyens d'entraînement (4) sont ménagés, lesquels comprennent deux moyens d'entraînement (4a, 4b) disposés de manière avoisinante l'un à l'autre, dans laquelle les deux moyens d'entraînement (4a, 4b) disposés de manière avoisinante l'un à l'autre présentent respectivement un engrenage (22, 25), notamment un engrenage angulaire (22, 25), et **en ce que** les deux moyens d'entraînement (4a, 4b) sont disposés de manière à ce que les engrenages (22, 25) soient orientés en direction opposée (26a, 26b).

12. Machine de thermoformage selon l'une quelconque des revendications précédentes,
**caractérisée en ce que** la machine de thermoformage (1) est réalisée en tant qu'une machine de thermoformage à une seule station.
